# FASCICULE DE BREVET EUROPEEN

(11) **EP 4 175 920 B1**
(45) Date de publication et mention de la délivrance du brevet: **24.04.2024**
(21) Numéro de dépôt: 21735319.2
(22) Date de dépôt: 28.06.2021
(51) Int. Cl.: C04B 2/12

(54) **PROCÉDÉ DE CALCINATION DE ROCHE MINÉRALE DANS UN FOUR DROIT VERTICAL À FLUX PARALLÈLES RÉGÉNÉRATIF ET FOUR MIS EN OEUVRE**
VERFAHREN ZUM KALZINIEREN VON MINERALGESTEIN IN EINEM REGENERATIVEN PARALLELSTROM-VERTIKALSCHACHTOFEN UND VERWENDETER OFEN
METHOD FOR CALCINING MINERAL ROCK IN A REGENERATIVE PARALLEL-FLOW VERTICAL SHAFT FURNACE, AND FURNACE USED

(30) Priorité: 03.07.2020 BE 202005498; 27.11.2020 WO PCT/EP2020/083769
(43) Date de publication de la demande: 10.05.2023
(60) Demande divisionnaire: 23203205.2
(73) Titulaire: S.A. LHOIST RECHERCHE ET DEVELOPPEMENT, 1342 Ottignies-Louvain-la-Neuve (BE)
(72) Inventeur: HABIB, Ziad, 1630 Linkebeek (BE); VAN CANTFORT, Olivier, 1150 Woluwe-Saint-Pierre (BE); CLOAREC, Tristan, 64490 Urdos (FR)
(74) Mandataire: Calysta NV
(86) Numéro de dépôt international: PCT/EP2021/067734
(87) Numéro de publication internationale: WO 2022/002869

(56) Documents cités:
- DE-A1-102010 019 330
- US-A1- 2020 048 146

## Description

La présente invention se rapporte à un procédé de calcination de roche minérale carbonatée dans un four droit vertical à flux parallèles régénératif ainsi qu'au four mis en oeuvre.

Le four droit vertical à flux parallèles régénératif ou four à chaux régénératif dit « PFRK » (Parallel Flow Regenerative Kiln ) a une efficacité énergétique de 85% à 90% ; c'est la plus élevée du secteur chaux, voire de tout le secteur de l'industrie énergivore : ciment, acier, verre... 60% de la chaux en Europe est produite dans ce type de four. Cette proportion est amenée à augmenter en Europe et dans le monde, en tenant compte des feuilles de route pour la transition énergétique et écologique.

Le four « PFRK » est un four droit à double cuves verticales où le combustible est injecté alternativement dans une cuve puis dans une autre pendant environ 10 à 15' avec une période d'arrêt entre cycles d'environ 1' à 2' pour inverser les circuits d'air et de combustibles. C'est la période d'« inversion ». Les deux cuves sont reliées par un carneau de liaison. Lorsqu'une cuve est en combustion (mode cuisson), les fumées de combustion chaudes traversent le carneau de liaison (voie de transfert pour gaz) et cèdent une partie de leur chaleur à la roche minérale à calciner pour la préchauffer dans l'autre cuve dite en mode régénération ou préchauffage. Les cuves du four PFRK sont soit cylindriques soit rectangulaires. Dans certains cas, il y a trois cuves, deux en préchauffage et une en cuisson. Les problèmes et les solutions énoncés plus bas sont valables pour toutes les géométries de four PFRK.

Le procédé mis en oeuvre dans ces fours connus comprend, en régime production,
- un chargement de roche minérale carbonatée en haut du four,
- un préchauffage de cette roche,
- une cuisson de cette roche avec sa décarbonatation en matière calcinée,
- un refroidissement de la matière calcinée par de l'air de refroidissement, et
- un déchargement de la matière calcinée en bas des cuves,
- chaque cuve fonctionnant alternativement en mode cuisson et en mode préchauffage, une cuve étant en mode cuisson pendant une période de temps prédéterminée pendant qu'au moins une autre cuve est en mode préchauffage, et inversement,
- le mode cuisson comprenant :
   ledit chargement de roche minérale carbonatée au haut de la cuve en mode cuisson,
   en présence de ladite roche minérale carbonatée, préchauffée, en cours de descente dans cette cuve, une combustion de combustible en présence d'oxygène de façon à obtenir ladite cuisson de cette roche et sa décarbonatation en matière calcinée avec dégagement de fumées de combustion sous la forme d'un courant gazeux descendant en co-courant dans la cuve en mode cuisson, et
   un passage dudit courant gazeux contenant ces fumées de combustion de la cuve en mode cuisson vers ladite au moins une cuve en mode préchauffage par l'intermédiaire de ladite voie de transfert pour gaz,
- le mode préchauffage comprenant :
   ledit préchauffage de la roche minérale carbonatée chargée par échange de chaleur avec le courant gazeux contenant les fumées de combustion, issues de la voie de transfert pour gaz, qui est ascendant dans ladite au moins une cuve en mode préchauffage, en contre-courant de ladite roche minérale carbonatée chargée, et
   une évacuation hors du four d'un effluent gazeux à base du courant gazeux contenant les fumées de combustion, au haut de ladite au moins une cuve en mode préchauffage.

Par roche minérale carbonatée, au sens de la présente invention, on entend en particulier de la roche calcaire, de la roche dolomitique et/ou de la magnésite qui se calcinent respectivement en chaux vive, en dolomie vive et /ou en magnésie. L'équation de calcination du calcaire en chaux est la suivante :

CaCO₃ (solide) + chaleur ←→ CaO (solide)+ CO₂ (gaz)

C'est une réaction endothermique réversible et la chaux se recombine avec le CO₂ à la première occasion en dessous de 900°C, avec un équilibre et une cinétique plus ou moins rapide en fonction de la température et de la concentration ambiante du CO₂.

Au cours de ce processus, la roche calcaire ou dolomitique de départ dégage donc un important volume de CO₂ pendant sa calcination en chaux ou dolomie. De plus, pour réaliser cette calcination, il faut atteindre des températures élevées et donc procéder à la combustion de combustibles, ce qui, à son tour, provoque un dégagement important de CO₂. Globalement, les procédés de calcination présentent l'inconvénient de participer activement à l'augmentation de l'effet de serre.

Ce procédé de calcination tout à fait courant présente aussi l'inconvénient de prévoir une combustion de combustible avec de l'air et le refroidissement du produit calciné par de l'air. Il en résulte un dégagement au haut du four d'un effluent gazeux présentant un taux élevé d'azote diatomique, et un taux comparativement faible de CO₂ (concentration en volume de l'ordre de 20% à 27% sur gaz sec), qu'il est coûteux de capturer en raison de la forte présence de diazote provenant de l'air utilisé.

Pour capter ce CO₂ on peut penser utiliser le procédé d'abattement par solvant chimique dit «amines» qui est la technique la plus répandue et appliquée sur les fumées de four en fin de ligne, après le filtre de dépoussiérage. Mais le caractère cyclique du four PFRK avec un arrêt du four de 1' à 2 ' toutes les 10' à 15' est incompatible avec cette technique, laquelle par ailleurs est très coûteuse et fait appel à un solvant non pérenne par rapport aux législations environnementales.

Pour pouvoir capter le CO₂ émis dans un four PFRK, on a déjà proposé de remplacer, dans le procédé mis en oeuvre, tout l'air du procédé, air de combustion porteur du combustible solide et air de refroidissement, par des fumées de combustion recyclées et d'introduire dans la cuve en mode cuisson de l'oxygène pur (voir CN105000811). JP2002060254 décrit également un recyclage des fumées de combustion comme air de refroidissement.

Pour tout homme de métier, il est clair que ce procédé est irréalisable, car la chaux va se recarbonater au cours du refroidissement. Comme vu plus haut, le CO₂ ne peut pas être recirculé pour refroidir la chaux, car elle se recombinera immédiatement avec ce CO₂ pour reformer du CaCOs. D'autre part, l'utilisation d'oxygène pur en tête de four poserait de sérieux problèmes en termes de compatibilité des matériaux et cet apport ne constituera pas un flux massique suffisant pour récupérer efficacement la chaleur accumulée dans la zone de régénération. Les désavantages et problèmes de faisabilité de ce procédé ont déjà été discutés dans la demande de brevet US2020/0048146.

A noter également que l'air de refroidissement dans le four PFRK, contrairement au four rotatif par exemple, n'a pas d'impact direct sur la combustion et le déroulement de la calcination dans la cuve en mode cuisson. Il n'a pas d'effet attendu sur la qualité du produit.

Par régime production, il faut entendre que le four est dans son service normal pendant lequel il produit de manière continue de la matière calcinée. Ce régime ne concerne donc pas les phases de démarrage du four, d'arrêt de celui-ci ou de maintenance en cas de dysfonctionnement.

La présente invention a pour but de porter au moins partiellement remède au problème d'émission importante de CO₂ dans l'atmosphère des fours de type PFRK, sans modifier leur fonctionnement cyclique et en n'apportant pas ou peu de modifications à leur structure. Elle a donc aussi pour but de permettre une capture du CO₂ présent dans les effluents gazeux émis par le four.

Pour résoudre ce problème, on a prévu, suivant l'invention, un procédé de calcination de roche minérale dans un four droit vertical à flux parallèles régénératif tel qu'indiqué au début, ce procédé étant caractérisé en ce que ladite combustion de combustible a lieu en présence d'un excès d'oxygène par rapport aux besoins stoechiométriques et en ce qu'il comprend en outre
- un prélèvement d'une partie de l'effluent gazeux évacué hors du four,
- une formation d'un mélange comburant par mélange de cette partie prélevée de l'effluent gazeux évacué hors du four avec du dioxygène concentré, et
- une introduction de ce mélange comburant au haut de la cuve en mode cuisson de manière à assurer ladite combustion de combustible en présence d'oxygène,
l'effluent gazeux évacué hors du four étant concentré en CO₂.

La combustion du combustible dans du dioxygène concentré donnerait lieu à des températures de flamme trop élevées pour les équipements usuels du four. Aussi, il est prévu suivant l'invention de prélever une partie de l'effluent gazeux riche en CO₂ et de le mélanger au dioxygène. Au lieu d'un comburant usuel formé du mélange O₂ + N₂ de l'air, on obtient ainsi un mélange O₂ + CO₂ à température de flamme appropriée.

La combustion du combustible dans du dioxygène donne lieu au courant gazeux contenant les fumées de combustion et à la calcination de la roche carbonatée. Cela a pour effet de produire principalement du CO₂ à côté de quelques impuretés, présentes sous la forme de traces dans le combustible et dans la matière à calciner, et d'un peu d'oxygène non consommé par la combustion du combustible. Ces fumées de combustion comportent naturellement également le CO₂ amené dans le mélange comburant. Il en résulte évidemment, par rapport au procédé classique, une augmentation drastique de la teneur en CO₂ de l'effluent gazeux dégagé au haut du four. Par effluent gazeux concentré en CO₂, il faut entendre suivant l'invention qu'il présente une teneur en CO₂ d'au moins 35%, avantageusement d'au moins 45%, de préférence d'au moins 60%, notamment d'au moins 80%, et particulièrement avantageusement d'au moins 90% en volume sur gaz sec. Ce CO₂ devient ainsi utilisable ou séquestrable dans des conditions favorables, ce qui permet de diminuer radicalement la contribution à l'effet de serre du four.

La mise en oeuvre de ce procédé ne requiert pas nécessairement d'aménagement particulier du four en soi. Les seules modifications à apporter à celui-ci peuvent être simplement extérieures au four et consister à changer les circuits des effluents sortant du four et à prévoir au moins une source de dioxygène concentré.

Par dioxygène concentré (encore appelé oxygène dans la suite), il faut entendre suivant l'invention un gaz dont le taux en oxygène dépasse 50% en volume. Il sera de préférence égal ou supérieur à 90%, en particulier à 93%, avantageusement de 98 à 100% en volume. La source de dioxygène concentré peut, par exemple, être une unité de séparation d'air qui sépare l'air en dioxygène et diazote et qui travaille en parallèle au four, ou encore un réservoir de dioxygène installé à côté du four. Avantageusement, la combustion de combustible a lieu en présence d'un excès d'oxygène, de préférence de l'ordre de 5 à 50%, en particulier de 10 à 30%, avantageusement de 15 à 25% en volume par rapport aux besoins stoechiométriques de la combustion.

Par combustible, on entend, suivant l'invention, tout combustible solide, liquide ou gazeux, par exemple du gaz naturel, de l'hydrogène, du biogaz, du fioul, des huiles, du charbon ou du coke en poudre, de la biomasse solide, comme de la sciure de bois, du combustible solide de récupération, comme des plastiques, du papier, des cartons, etc. Avantageusement, dans le cas d'un combustible solide, son introduction dans la cuve en mode cuisson est effectuée sous une forme granulaire ou pulvérulente à l'aide d'une portion de ladite partie prélevée de l'effluent gazeux évacué hors du four, comme gaz porteur. On peut aussi prévoir, comme gaz porteur, du CO₂ en provenance d'une autre source quelconque.

Suivant un mode de réalisation de l'invention, le refroidissement de la matière calcinée comprend, au bas de chacune des cuves, une amenée d'air de refroidissement qui traverse en contre-courant la matière calcinée descendante et est chauffé à son contact, l'air de refroidissement chauffé se mélangeant, dans la cuve en mode cuisson, au courant gazeux contenant les fumées de combustion, avant son passage à travers la voie de transfert pour gaz, et, dans ladite au moins une cuve en mode préchauffage, à ce courant gazeux après ce passage, l'effluent gazeux concentré en CO₂ qui est évacué hors du four contenant les fumées de combustion et l'air de refroidissement. Dans ce cas, seul l'air de combustion du procédé classique est remplacé par le mélange comburant à base de l'effluent gazeux concentré en CO₂, évacué hors du four, et d'oxygène. Un tel procédé permet d'augmenter la teneur en CO₂ de l'effluent gazeux évacué hors du four PFRK classique de 20 à 27% en volume sur gaz sec à une valeur d'au moins 35%, avantageusement d'au moins 45%, et même jusqu'à 65% en volume sur gaz sec dans un four suivant l'invention. Pour illustration, un four PFRK mettant en oeuvre ce procédé peut avantageusement remplacer le four à coke actuellement utilisé dans les soudières, pour fournir des fumées à 40% en volume de CO₂. Par ailleurs, le PFRK est un four « durable », économe en énergie, et surtout il élimine tous les problèmes environnementaux liés aux fours à coke, dont les émissions importantes de polluants (CO, NH₃, H₂S...).

Suivant un mode de réalisation particulier de l'invention, l'air de refroidissement est amené au four en un volume total équivalant ou inférieur à un minimum thermodynamique nécessaire pour refroidir la matière calcinée à une température de référence de 100°C. Avantageusement, le volume total d'air de refroidissement amené au four peut être de l'ordre de 40 à 60% dudit minimum thermodynamique, de préférence égal à 50% de celui-ci. Dans ce cas, le produit déchargé aura une température supérieure au fonctionnement normal. Il sera alors nécessaire d'adapter les équipements de déchargement en matériaux résistant à cette température.

On peut aussi avantageusement prévoir que ledit refroidissement de la matière calcinée comprenne, au bas de la seule cuve en mode cuisson, une amenée d'air de refroidissement qui traverse en contre-courant la matière calcinée descendante et est chauffé à son contact, l'air de refroidissement chauffé se mélangeant au courant gazeux contenant les fumées de combustion, avant son passage à travers la voie de transfert pour gaz, et l'effluent gazeux concentré en CO2 qui est évacué hors du four contenant les fumées de combustion et l'air de refroidissement. Dans ce cas-ci aussi, l'air de refroidissement peut être amené au four en un volume total inférieur à un minimum thermodynamique nécessaire pour refroidir la matière calcinée à une température de référence de 100°C. Avantageusement, le volume total d'air de refroidissement amené au four peut ainsi être de l'ordre de 40 à 60% dudit minimum thermodynamique, de préférence égal à 50% de celui-ci.

Suivant un mode particulièrement avantageux de l'invention, ledit refroidissement de la matière calcinée comprend, au bas de chacune des cuves ou au bas de la seule cuve en mode cuisson, une amenée d'air de refroidissement qui traverse en contre-courant la matière calcinée descendante et est chauffé à son contact, le procédé comprenant en outre une extraction hors du four de l'air de refroidissement chauffé, l'effluent gazeux évacué hors du four contenant une teneur en CO₂ d'au moins 90% en volume sur gaz sec, de préférence d'au moins 95%. Dans ce cas l'effluent gazeux évacué hors du four est formé presque exclusivement des fumées de combustion. Il devient possible d'utiliser un tel gaz dans des industries spécialisées ou de le séquestrer.

Suivant un mode particulier de l'invention, le procédé comprend en outre un échange de chaleur entre l'air de refroidissement chauffé, extrait hors du four, et ladite partie prélevée de l'effluent gazeux évacué hors du four, avant ou après son mélange avec du dioxygène concentré. Cela permet une récupération de chaleur dans le mélange comburant à introduire dans la cuve en mode cuisson.

D'autres détails et particularités du procédé suivant l'invention sont indiqués dans les revendications annexées.

D'autres particularités de l'invention ressortiront également de la description donnée ci-après, à titre non limitatif et en faisant référence aux dessins annexés.
La figure 1 représente de manière schématique un four PFRK classique.
Les figures 2a et 2b représentent une modélisation numérique de la concentration en % massique d'oxygène des courants gazeux dans un four PFRK à section circulaire classique et dans un four PFRK à section rectangulaire classique.
Les figures 3 et 4 illustrent de manière schématique plusieurs formes de réalisation de four à section circulaire pour l'invention.

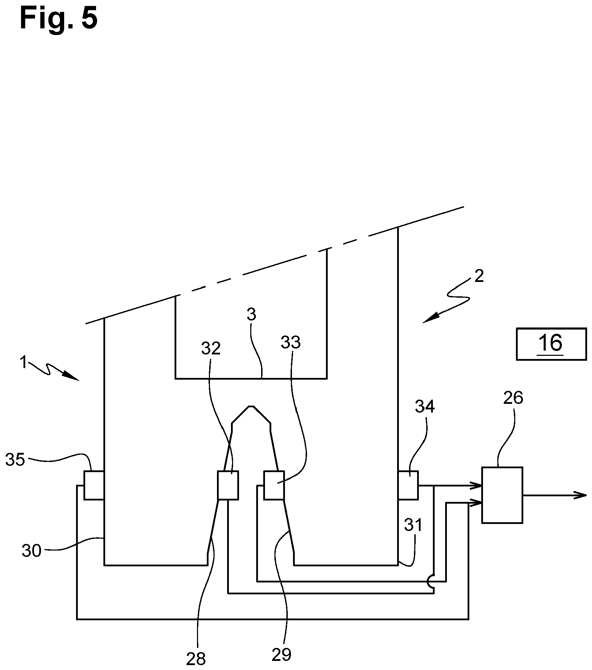

La figure 5 est une représentation brisée d'une forme de réalisation de four à section rectangulaire pour l'invention.

Sur les figures, les éléments identiques ou analogues portent les mêmes références. D'une manière conventionnelle la cuve illustrée à gauche est en mode cuisson et la cuve illustrée à droite en mode préchauffage. Pour ne pas encombrer les dessins des éléments standards, comme par exemple les équipements de chargement ou déchargement, ils ne sont pas représentés ou ils le sont de manière très schématique.

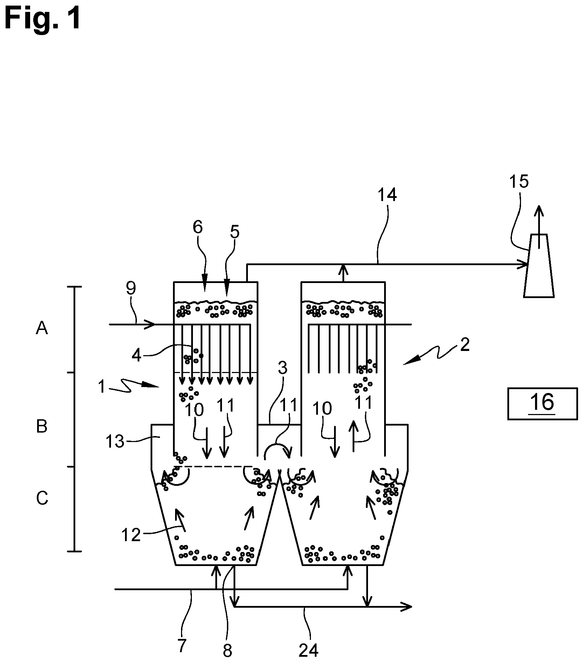

Comme on peut le voir à la figure 1, le four PFRK illustré est un four droit à double cuve 1, 2 où le combustible est injecté alternativement dans une cuve 1 puis dans une autre 2 pendant environ 12' avec une période d'arrêt entre cycles de 1' à 2' pour inverser les circuits. C'est la période d'« inversion ». Les deux cuves ont une section circulaire et sont pourvues de canaux périphériques 13 qui sont interconnectés par un carneau de liaison 3. Les cuves sont divisées en hauteur en trois zones, la zone de préchauffage A où la roche carbonatée est préchauffée avant calcination, la zone de combustion B où a lieu la cuisson de la roche carbonatée et la zone de refroidissement C où a lieu le refroidissement de la matière calcinée.

Lorsqu'une cuve est en mode cuisson, ici la cuve 1, un dispositif d'alimentation en combustible en forme de lances 4 injecte dans la cuve un combustible 9, qui, dans l'exemple illustré, est du gaz naturel. La roche carbonatée, chargée au haut de la cuve par une entrée 5 en position ouverte, descend progressivement dans celle-ci. De l'air de combustion est introduit au haut de la cuve par une ouverture d'amenée 6, ce qui permet une combustion du combustible à la sortie des lances 4 et une décarbonation de la roche carbonatée en matière calcinée 10. Le courant gazeux 11 formé par la combustion et la décarbonatation descend en co-courant de la matière calcinée et, par l'intermédiaire du canal périphérique 13, passe dans le carneau de liaison 3. De l'air de refroidissement est, par un conduit d'amenée 7, introduit au bas de la cuve, en contre-courant de la matière calcinée, pour la refroidir. L'air de refroidissement chauffé 12 se mélange au courant gazeux contenant les fumées de combustion 11 pour passer dans le carneau de liaison 3. La matière calcinée est déchargée par la sortie 8 dans un équipement de déchargement 24.

Lorsqu'une cuve est en mode préchauffage, ici la cuve 2, le dispositif d'alimentation en combustible est fermé et les lances 4 sont donc hors service. Il en est de même de l'entrée 5 pour la roche carbonatée et de l'ouverture 6 pour l'amenée de l'air de combustion. Par contre, le conduit d'amenée 7 pour l'air de refroidissement et la sortie 8 pour la matière calcinée restent en position d'ouverture. Après échange de chaleur avec la matière calcinée descendante 10, l'air de refroidissement chauffé se mélange au courant gazeux 11 qui, en provenance du carneau de liaison 3, parvient dans la cuve par le canal périphérique 13. Ce courant gazeux 11 progresse jusqu'au haut de la cuve où il est évacué du four par un conduit d'évacuation 14 et transféré vers une cheminée 15. Dans la cuve en mode cuisson 1, ce conduit d'évacuation 14 est fermé.

Le four comprend aussi un système d'inversion 16 représenté de manière schématique. Il commande de manière synchronisée le fonctionnement des cuves, pendant le temps d'inversion des cuves, et cela de manière directe ou à distance. Il commande la mise en service ou hors service de tous les éléments du four de façon que, en régime production, chaque cuve fonctionne alternativement en mode cuisson et en mode préchauffage.

Dans certains cas, il y a trois cuves, deux en préchauffage et une en combustion.

La figure 1 montre un four conçu pour la production de 430 tonnes de chaux par jour. Tous les débits gazeux mentionnés dans la suite sont exprimés en Nm³/t de chaux produite.

De façon à réagir avec le gaz injecté comme combustible dans la cuve 1, 1120 Nm³/t d'air de combustion sont mis en oeuvre de manière à obtenir un excès d'air de 19% en poids par rapport aux besoins stoechiométriques, et de façon à former un volume de 100 Nm³/t de CO₂ à la combustion. La concentration massique de l'oxygène dans le gaz entrant est de 23%, puisqu'il s'agit d'air. La température atteinte est alors largement supérieure à 900°C, ce qui entraîne une décarbonatation de la roche calcaire avec un dégagement de 380 Nm³ /t de CO₂. Pour refroidir la chaux produite à une température de l'ordre de 100°C, on introduit par le fond des deux cuves 290 Nm³ /t d'air de refroidissement, ce qui fait au total 580 Nm³ /t. A la cheminée on obtient 2250 Nm³ /t d'effluent gazeux qui contient 480 Nm³ /t de CO₂, c'est-à-dire que cet effluent gazeux présente une teneur en CO₂ de 23% sur gaz sec. A cette faible teneur, le CO₂ est difficilement exploitable ou séquestrable et l'effluent gazeux est donc totalement dégagé à l'atmosphère.

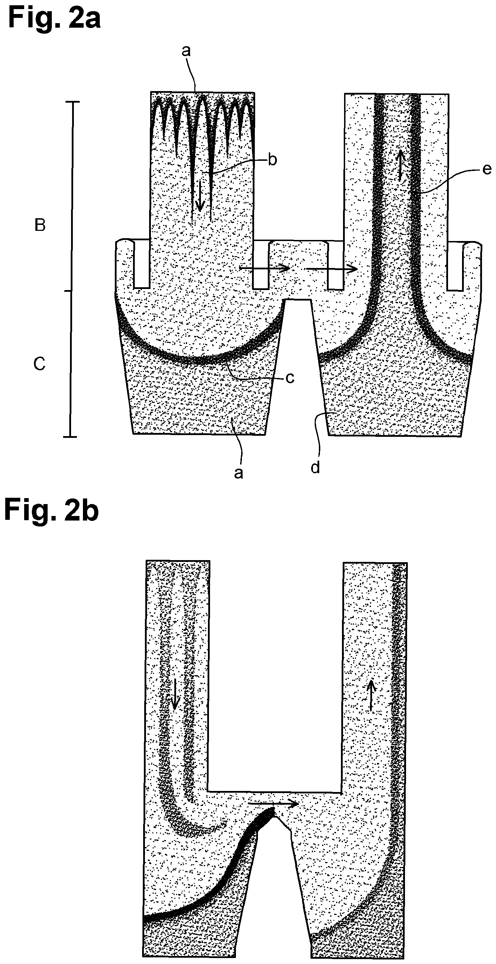

La figure 2a représente une modélisation numérique du four PFRK à section circulaire montrant le parcours des gaz en fonction de leur teneur en oxygène. Elle ne montre que la zone de combustion B, à partir de l'extrémité des lances, et la zone de refroidissement C, et donc le haut des cuves n'est pas représenté.

Zones a : dans la cuve en mode cuisson, air de refroidissement (en bas) et air de combustion (en haut, juste au-dessus de l'extrémité des lances) avec une teneur en O₂ de 23% en poids.

Zones b : jets de fumées de combustion émis par les lances, dans lesquels il n'y a quasiment plus d'oxygène et entre lesquels on peut encore trouver un peu d'O₂ qui n'a pas réagi.

Zone c : les fumées pénètrent profondément dans la zone de refroidissement C en se mélangeant petit à petit à l'air de refroidissement. Elles repoussent périphériquement le mélange gazeux dans le canal périphérique 13, puis le carneau de liaison 3.

Zone d : dans la cuve en mode préchauffage, air de refroidissement.

Zone e : mélange entre le courant gazeux provenant du canal périphérique 13 et l'air de refroidissement. Plus on progresse vers le centre de la cuve, plus la teneur résiduelle en O₂ augmente.

La figure 2b représente une pareille modélisation numérique sur un four PFRK dont les cuves ont une section rectangulaire. Ici la distribution des flux gazeux n'est plus symétrique comme dans le cas des cuves circulaires.

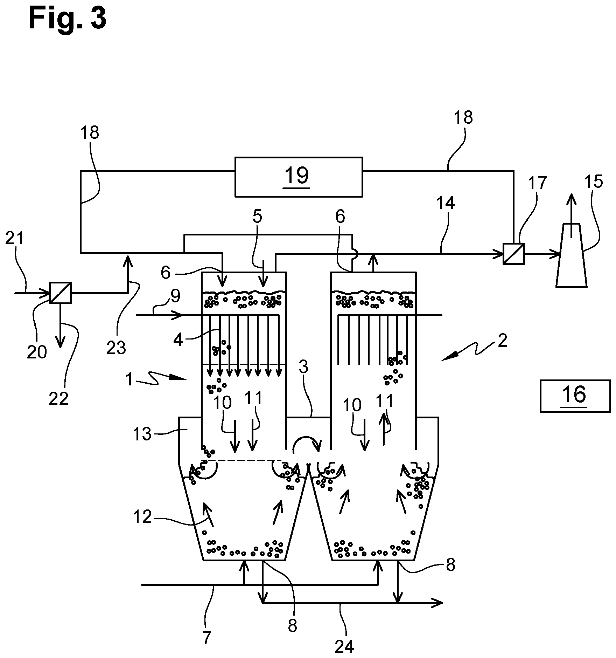

La figure 3 est une vue d'un four pour la présente invention. Dans ce cas, il n'y a pas de modification de la structure du four. A l'extérieur on a prévu, sur le conduit d'évacuation 14, un organe de séparation 17, capable de prélever une partie de l'effluent gazeux évacué du four et de l'introduire dans un circuit de recirculation 18. Dans ce circuit la partie d'effluent gazeux prélevée est avantageusement traitée dans une unité de traitement 19, où elle peut par exemple être filtrée et/ou séchée. Une unité de séparation d'air 20 sépare de l'air alimenté par le conduit 21 en N₂ évacué par le conduit 22 et en O₂ amené au circuit de recirculation 18 par le conduit d'amenée 23. Ce circuit 18 conduit ensuite le mélange comburant formé de la fraction recirculée d'effluent gazeux et de O₂ concentré au sommet de chacune des cuves à l'ouverture d'amenée 6.

Le fonctionnement du four de la figure 3 est semblable à celui d'un four PFRK. L'organe de séparation 17 est en service en continu, de même que l'unité de traitement 19 et l'unité de séparation d'air 20. Comme on l'a déjà vu, le système d'inversion 16 ferme le conduit d'évacuation 14 au haut de la cuve en mode cuisson. Il ouvre par contre, au sommet de cette cuve, l'ouverture d'amenée 6 pour permettre l'introduction du mélange comburant, tandis qu'elle est fermée au sommet de la cuve en mode préchauffage.

On met en oeuvre la même quantité de roche carbonatée et les mêmes débits de combustible et d'air de refroidissement que dans le four classique décrit plus haut. Par le conduit de recirculation 18 on prélève 830 Nm³/t d'effluent gazeux évacué hors du four, riche en CO₂. A cet effluent recirculé on mélange 160 Nm³/t de O₂, de façon à conserver dans le mélange comburant ainsi formé la même concentration massique de 23% de O₂ et d'obtenir lors de la combustion le même excès d'oxygène de 19% en poids par rapport aux besoins stoechiométriques. L'azote N₂ de l'air de combustion est ainsi remplacé par son équivalent massique de CO₂. Comme celui-ci est plus lourd que le diazote (poids spécifique de 1,977 par rapport à 1,25 g/Nm³), le volume total des fumées diminue dans le four, ce qui occasionne une diminution de la perte de charge de 13% par rapport au four classique. A la cheminée il y a dégagement de 1240 Nm³/t d'effluent gazeux qui contient à présent 43 % en volume sur gaz sec de CO₂. A cette teneur, comme expliqué plus haut, une exploitation industrielle devient possible, comme par exemple dans des soudières.

Comme variante dans un tel four pour l'invention, on peut, pour diminuer encore davantage l'apport d'air dans le procédé, réduire le débit d'air de refroidissement. Par exemple, on peut réduire cet apport de 50%, ce qui fait 290 Nm³/t d'air de refroidissement. On peut introduire ce volume réduit par le conduit d'amenée 7 de la seule cuve en mode cuisson ou en faisant usage des conduits d'amenée 7 des deux cuves. Cette mesure a pour effet de réduire la dilution des fumées de 50%. Il en résulte un refroidissement moindre de la matière calcinée qui est évacuée par les sorties 8. Il devient alors nécessaire de prévoir des équipements de déchargement qui résistent à une température plus élevée que 100°C, par exemple une table de déchargement en acier réfractaire et des chaînes trainantes en acier. Comme la chaux sort plus chaude, il y a donc eu moins de récupération de chaleur par l'air de refroidissement, ce qui est compensé par une légère augmentation de l'apport de combustible à un débit tel qu'il occasionne à la combustion une formation de 120 Nm³/t de CO₂. Cette augmentation nécessite à son tour, dans l'effluent gazeux évacué hors du four de 1730 Nm³/t, une adaptation de son prélèvement dans le circuit de recirculation à 865 Nm³/t et un mélange de cet effluent prélevé avec 200 Nm³/t de O₂ de façon à conserver dans le mélange comburant ainsi formé la même concentration massique de 23% de O₂ et d'obtenir lors de la combustion le même excès d'oxygène de 19% en poids par rapport aux besoins stoechiométriques. A la cheminée on obtient alors seulement 865 Nm³/t d'effluent gazeux présentant une teneur élevée en CO₂ de 63% en volume sur gaz sec.

En fait, une concentration de CO₂ sur mesure entre 40% et 65% en volume de CO₂ peut être établie à la cheminée en réglant la quantité de l'air de refroidissement entre 100% et 50% du volume minimum thermodynamique nécessaire pour refroidir la matière calcinée à une température de référence de 100°C. Une concentration plus élevée en CO₂ pourrait être obtenue en réduisant l'apport d'air de refroidissement en dessous de 50%, dans la limite de compatibilité de la température de la chaux avec le système de déchargement et de transport haute température installé pour cela.

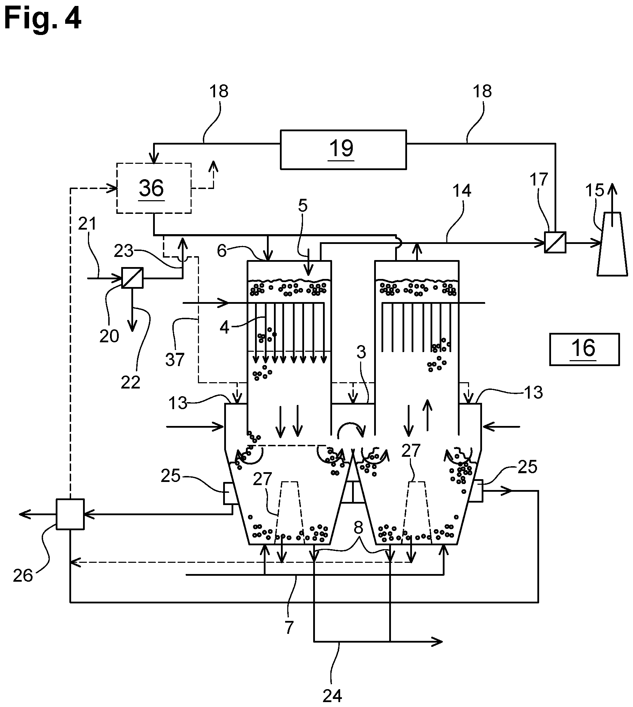

La figure 4 est une vue d'un four avantageux pour la présente invention. Comme on peut le voir, ce four comprend les caractéristiques de celui de la figure 3, mais, en plus, comporte une légère transformation au niveau de la structure extérieure du four.

Il s'agit ici de soutirer l'air de refroidissement chauffé par contact avec la matière calcinée, par installation d'un système d'extraction. Les cuves 1 et 2 sont chacune pourvues, en dessous du carneau de liaison 3 et des canaux périphériques 13, d'un anneau collecteur 25 qui communique avec un élément de soutirage 26 de manière à permettre une extraction hors du four de l'air de refroidissement chauffé. De cette façon, on peut soutirer une partie ou la totalité de l'air de combustion, au besoin en soutirant également une faible proportion des fumées de combustion. En effet, comme le montre la figure 2a, du fait que les gaz descendants pénètrent profondément dans la zone de refroidissement C, l'air de refroidissement est poussé vers les parois extérieures du four où est agencé l'anneau collecteur. Les cuves peuvent en outre comprendre éventuellement, au fond, un élément collecteur central 27 communiquant avec l'élément de soutirage 26 de manière à permettre aussi une extraction centrale d'air de refroidissement chauffé, en dessous du carneau de liaison 3.

Dans le cas de fours rectangulaires, il est aussi possible de soutirer l'air de refroidissement sans anneau collecteur, par des reprises latérales. Ainsi qu'il ressort de la figue 5, chaque cuve comporte 4 côtés. Un côté 28 d'une cuve fait face à un côté 29 de la cuve voisine et chaque cuve comporte un second côté 30 et respectivement 31 qui est à l'opposé de ceux qui se font face. La voie de transfert pour gaz est un carneau de liaison 3 qui relie directement une cuve à l'autre par leurs côtés 28 et 29. En dessous du carneau de liaison, les côtés 28 à 31 sont chacun pourvus d'un tunnel collecteur 32 à respectivement 35 communiquant avec un élément de soutirage 26 de manière à permettre une extraction hors du four d'air de refroidissement chauffé.

Comme la répartition des courants gazeux dans un four à cuve rectangulaire n'est pas symétrique (voir figure 2b), l'air de refroidissement n'est poussé par les fumées chaudes que vers un côté. Aussi, dans le four représenté où la cuve 1 est en mode cuisson et la cuve 2 en mode préchauffage, le système d'inversion 16 ouvre uniquement les tunnels collecteurs 32 et 34. Au cours du cycle suivant, seuls les tunnels collecteurs 33 et 35 seront ouverts.

Dans le four illustré sur la figure 4, on met en oeuvre la même quantité de roche carbonatée et les mêmes débits d'air de refroidissement que dans le four classique décrit plus haut. L'air de refroidissement chauffé est extrait hors du four par l'élément de soutirage 26. Dans la cuve 1, on procède à une introduction de combustible telle qu'on obtient la formation de 105 Nm³/t de CO₂ à la combustion. On évacue au haut de la cuve 2 1330 Nm³/t d'effluent gazeux. Par le conduit de recirculation 18 on prélève 730 Nm³/t de cet effluent gazeux évacué, riche en CO₂. A cet effluent recirculé on mélange 220 Nm³/t de O₂, de façon à conserver dans le mélange comburant ainsi formé la même concentration massique de 23% de O₂ et d'obtenir lors de la combustion le même excès d'oxygène de 19% en poids par rapport aux besoins stoechiométriques. On obtient ainsi à la cheminée seulement 600 Nm³/t d'effluent gazeux présentant une teneur de 96% sur gaz sec de CO₂.

Dans le four illustré sur la figure 4, pour récupérer une partie de l'énergie de l'air chaud extrait par l'élément de soutirage 26, on peut prévoir un échange de chaleur avec la partie d'effluent gazeux recirculé par l'intermédiaire d'un échangeur de chaleur 36, avant ou après son mélange avec du dioxygène concentré.

On peut aussi prévoir en outre, dans le carneau de liaison 3 et les canaux périphériques 13, une injection d'une fraction de ladite partie prélevée de l'effluent gazeux évacué hors du four par l'intermédiaire d'un conduit d'injection 37. Eventuellement auparavant un échange de chaleur entre l'air de refroidissement chauffé, extrait hors du four, et cette fraction susdite à injecter peut avoir lieu à l'aide d'un échangeur de chaleur, par exemple l'échangeur de chaleur36. En l'absence de celui-ci, un échangeur de chaleur non représenté peut être prévu sur le conduit d'injection 37.

Suivant encore une autre variante, on peut mitiger la température dans le carneau de liaison par injection d'eau à des endroits choisis du carneau et/ou de l'anneau périphérique. Cette eau ajoutée n'a aucun effet de dilution sur la concentration du CO₂ sur gaz sec.

De tels agencements pour récupérer la chaleur de l'air de refroidissement chauffé, extrait hors du four, à l'aide d'échangeur de chaleur ainsi que de tels dispositifs d'injection de CO2 ou d'eau dans le carneau de liaison peuvent évidemment aussi être prévus avec des fours à cuves rectangulaires.

Il est évident qu'on peut aussi concevoir un four semblable à celui représenté sur la figure 4 où l'air de refroidissement est injecté au bas d'une seule des deux cuves.

Dans le tableau 1 ci-dessous sont repris les débits dans un four classique et dans différentes variantes de four pour l'invention et dans le tableau 2 les quantités des différents éléments gazeux à l'entrée des fours.

Dans la colonne exemples, 1 signifie un four PFRK classique, 2 et 3 sont des fours selon la figure 3 avec des débits variables d'air de refroidissement et 4 et 5 sont des fours selon la figure 4 avec et sans échangeur de chaleur.

**Tableau 1**

| | Air de combustion Nm³/t | Air de refroidissement Nm³/t | Injection de O₂ Nm³/t | Effluent recyclé Nm³/t | Effluent haut du four Nm³/t | Effluent cheminée Nm³/t | DP* |
|---|---|---|---|---|---|---|---|
| 1 | 1120 | 580 | 0 | - | 2250 | 2250 | DP₀ |
| 2 | 0 | 580 | 160 | 830 | 2070 | 1240 | -13% |
| 3 | 0 | 290 | 200 | 865 | 1730 | 865 | -26% |
| 4 | 0 | 580 | 220 | 730 | 1330 | 600 | -49% |
| 5 | 0 | 580 | 250 | 820 | 1440 | 620 | -39% |

| | | | | | | | |
|---|---|---|---|---|---|---|---|
| *DP = perte de charge | | | | | | | |

**Tableau 2**

| | Injection de O₂ Nm³/t | O₂ kg/t | N₂ kg/t | CO₂ kg/t | O₂ % massique | O₂ stoechiométrique kg/t | Excès de O₂ % |
|---|---|---|---|---|---|---|---|
| 1 | 0 | 333 | 1090 | 0,89 | 23 | 281 | 19 |
| 2 | 160 | 331 | 448 | 646 | 23 | 278 | 19 |
| 3 | 200 | 367 | 277 | 915 | 23 | 303 | 18 |
| 4 | 220 | 346 | 5 | 1143 | 23 | 294 | 18 |
| 5 | 250 | 394 | 6 | 1284 | 23 | 327 | 20 |

Il est bien entendu que la présente invention n'est en aucune façon limitée aux formes de réalisations décrites ci-dessus et que bien des modifications peuvent y être apportées sans sortir du cadre des revendications annexées.

On pourra par exemple avantageusement prévoir de remplacer les lances d'injection de combustible, refroidies par de l'air, par des lances isolées thermiquement.

## Revendications

1. Procédé de calcination de roche minérale dans un four droit vertical à flux parallèles régénératif, dans lequel au moins deux cuves sont interconnectées par une voie de transfert pour gaz, ce procédé comprenant, en régime production,
- un chargement de roche minérale carbonatée en haut du four,
- un préchauffage de cette roche,
- une cuisson de cette roche avec sa décarbonatation en matière calcinée,
- un refroidissement de la matière calcinée par de l'air de refroidissement, et
- un déchargement de la matière calcinée en bas des cuves,
- chaque cuve fonctionnant alternativement en mode cuisson et en mode préchauffage, une cuve étant en mode cuisson pendant une période de temps prédéterminée pendant qu'au moins une autre cuve est en mode préchauffage, et inversement,
- le mode cuisson comprenant :
ledit chargement de roche minérale carbonatée au haut de la cuve en mode cuisson,
en présence de ladite roche minérale carbonatée, préchauffée, en cours de descente dans cette cuve, une combustion de combustible en présence d'oxygène de façon à obtenir ladite cuisson de cette roche et sa décarbonatation en matière calcinée avec dégagement de fumées de combustion sous la forme d'un courant gazeux descendant en co-courant dans la cuve en mode cuisson, et
un passage dudit courant gazeux contenant ces fumées de combustion de la cuve en mode cuisson vers ladite au moins une cuve en mode préchauffage par l'intermédiaire de ladite voie de transfert pour gaz,
- le mode préchauffage comprenant :
ledit préchauffage de la roche minérale carbonatée chargée par échange de chaleur avec le courant gazeux contenant les fumées de combustion, issues de la voie de transfert pour gaz, qui est ascendant dans ladite au moins une cuve en mode préchauffage, en contre-courant de ladite roche minérale carbonatée chargée, et
une évacuation hors du four d'un effluent gazeux à base du courant gazeux contenant les fumées de combustion, au haut de ladite au moins une cuve en mode préchauffage,
**caractérisé en ce que** ladite combustion de combustible a lieu en présence d'un excès d'oxygène par rapport aux besoins stoechiométriques et **en ce qu'**il comprend en outre
- un prélèvement d'une partie de l'effluent gazeux évacué hors du four,
- une formation d'un mélange comburant par mélange de cette partie prélevée de l'effluent gazeux évacué hors du four avec du dioxygène concentré, et
- une introduction de ce mélange comburant au haut de la cuve en mode cuisson de manière à assurer ladite combustion de combustible en présence d'oxygène,
l'effluent gazeux évacué hors du four étant concentré en CO₂.

2. Procédé suivant la revendication 1, **caractérisé en ce que** ledit refroidissement de la matière calcinée comprend, au bas de chacune des cuves, une amenée d'air de refroidissement qui traverse en contre-courant la matière calcinée descendante et est chauffé à son contact, **en ce que** l'air de refroidissement chauffé se mélange, dans la cuve en mode cuisson, au courant gazeux contenant les fumées de combustion, avant son passage à travers la voie de transfert pour gaz, et, dans ladite au moins une cuve en mode préchauffage, à ce courant gazeux après ce passage et **en ce que** l'effluent gazeux concentré en CO2 qui est évacué hors du four contient les fumées de combustion et l'air de refroidissement.

3. Procédé suivant la revendication 1, **caractérisé en ce que** ledit refroidissement de la matière calcinée comprend, au bas de la seule cuve en mode cuisson, une amenée d'air de refroidissement qui traverse en contre-courant la matière calcinée descendante et est chauffé à son contact, **en ce que** l'air de refroidissement chauffé se mélange au courant gazeux contenant les fumées de combustion, avant son passage à travers la voie de transfert pour gaz, et **en ce que** l'effluent gazeux concentré en CO2 qui est évacué hors du four contient les fumées de combustion et l'air de refroidissement.

4. Procédé suivant l'une ou l'autre des revendications 2 et 3, **caractérisé en ce que** l'air de refroidissement est amené au four en un volume total équivalant ou inférieur à un minimum thermodynamique nécessaire pour refroidir la matière calcinée à une température de référence de 100°C.

5. Procédé suivant la revendication 4, **caractérisé en ce que** le volume total d'air de refroidissement amené au four est de l'ordre de 40 à 60% dudit minimum thermodynamique, de préférence égal à 50% de celui-ci.

6. Procédé suivant la revendication 1, **caractérisé en ce que** ledit refroidissement de la matière calcinée comprend, au bas de chacune des cuves ou au bas de la seule cuve en mode cuisson, une amenée d'air de refroidissement qui traverse en contre-courant la matière calcinée descendante et est chauffé à son contact, **en ce que** le procédé comprend en outre une extraction de l'air de refroidissement chauffé hors du four et **en ce que** l'effluent gazeux évacué hors du four contient une teneur en CO₂ d'au moins 90% en volume sur gaz sec.

7. Procédé suivant la revendication 6, **caractérisé en ce qu'**il comprend en outre un échange de chaleur entre l'air de refroidissement chauffé, extrait hors du four, et ladite partie prélevée de l'effluent gazeux évacué hors du four, avant ou après son mélange avec du dioxygène concentré.

8. Procédé suivant l'une ou l'autre des revendications 6 et 7, **caractérisé en ce qu'**il comprend en outre, dans la voie de transfert pour gaz, une injection d'une fraction de ladite partie prélevée de l'effluent gazeux évacué hors du four et, éventuellement avant cette injection, un échange de chaleur entre l'air de refroidissement chauffé, extrait hors du four, et la fraction susdite à injecter.

9. Procédé suivant l'une quelconque des revendications 1 à 8, **caractérisé en ce qu'**il comprend en outre, dans la voie de transfert pour gaz, une injection d'eau.

10. Procédé suivant l'une quelconque des revendications 1 à 9, **caractérisé en ce que** ladite combustion de combustible comprend une introduction dans la cuve en mode cuisson d'un combustible gazeux, liquide ou solide et **en ce que**, dans le cas d'un combustible solide, ladite introduction est effectuée à l'aide d'une portion de ladite partie prélevée de l'effluent gazeux évacué hors du four, ou d'une autre source de CO2, comme gaz porteur.

## Patentansprüche

1. Verfahren zum Kalzinieren von Mineralgestein in einem aufrechten Vertikalofen mit regenerativem Parallelfluss, in dem mindestens zwei Schächte durch einen Übertragungsweg für Gas miteinander verbunden sind, das Verfahren im Produktionsbetrieb umfassend,
- ein Einfüllen karbonathaltigen Mineralgesteins an der Oberseite des Ofens,
- ein Vorwärmen dieses Gesteins,
- ein Brennen dieses Gesteins mit seiner Entkarbonatisierung zu kalziniertem Material,
- eine Abkühlen des kalzinierten Materials durch Kühlluft, und
- ein Entladen des kalzinierten Materials an der Unterseite der Schächte,
- wobei jeder Schacht abwechselnd in einem Brennmodus und in einem Vorwärmmodus betrieben wird, wobei ein Schacht über eine vorbestimmte Zeitdauer in Brennmodus ist, während mindestens ein anderer Schacht in Vorwärmmodus ist, und umgekehrt,
- der Brennmodus umfassend:
das Einfüllen des karbonathaltigen Mineralgesteins an der Oberseite des Schachts in Brennmodus,
in Anwesenheit des vorgewärmten karbonathaltigen Mineralgesteins, das in diesem Schacht absteigt, eine Brennstoffverbrennung in Anwesenheit von Sauerstoff, um das Brennen dieses Gesteins und seine Entkarbonatisierung zu kalziniertem Material mit Freisetzung von Rauchgas in Form eines Gasstroms, der als Gleichstrom in dem Schacht in Brennmodus absteigt, zu erreichen, und
einen Durchgang des Gasstroms, der diese Rauchgase enthält, von dem Schacht in Brennmodus zu dem mindestens einen Schacht in Vorwärmmodus über den Übertragungsweg für Gas,
- der Vorwärmmodus umfassend:
das Vorwärmen des eingefüllten karbonathaltigen Mineralgesteins durch Wärmeaustausch mit dem Gasstrom, der die Rauchgase enthält, die aus dem Übertragungsweg für Gas stammen, der in dem mindestens einen Schacht in dem Vorwärmmodus in einem Gegenstrom zu dem eingefüllten karbonathaltigen Mineralgestein aufsteigt, und
ein Abführen aus dem Ofen eines gasförmigen Abflusses basierend auf dem Gasstroms, der die Rauchgase enthält, an der Oberseite des mindestens einen Schachts in Vorwärmmodus,
**dadurch gekennzeichnet, dass** die Brennstoffverbrennung in Anwesenheit eines Sauerstoffüberschusses in Bezug auf den stöchiometrischen Bedarf erfolgt, und dass sie ferner Folgendes umfasst
- eine Entnahme eines Teils des aus dem Ofen abgeleiteten gasförmigen Abflusses,
- eine Bildung eines Verbrennungsgemischs durch Mischen dieses entnommenen Teils des aus dem Ofen abgeführten gasförmigen Abflusses mit konzentriertem Sauerstoff und
- eine Einführung dieses Verbrennungsgemischs an der Oberseite des Schachts in Brennmodus, um die Brennstoffverbrennung in Anwesenheit von Sauerstoff zu gewährleisten,
wobei der aus dem Ofen abgeführte gasförmige Abfluss an CO₂ konzentriert ist.

2. Verfahren nach Anspruch 1, **dadurch gekennzeichnet, dass** das Kühlen des kalizinierten Materials an dem Boden von jedem der Schächte eine Zufuhr von Kühlluft umfasst, die in Gegenstrom durch das absteigende kalzinierte Material verläuft und bei Kontakt damit erwärmt wird, dass die erwärmte Kühlluft sich in dem Schacht in Brennmodus mit dem die Rauchgase enthaltenden Gasstrom, bevor er durch den Gasübertragungsweg geleitet wird, und in dem mindestens einen Schacht in Vorwärmmodus mit diesem Gasstrom nach diesem Durchgang mischt, und dass der an CO₂-konzentrierte gasförmige Abfluss, der aus dem Ofen abgeleitet wird, die Rauchgase und die Kühlluft enthält.

3. Verfahren nach Anspruch 1, **dadurch gekennzeichnet, dass** das Kühlen des kalizinierten Materials an dem Boden des einzigen Schachts eine Zufuhr von Kühlluft umfasst, die in Gegenstrom durch das absteigende kalzinierte Material verläuft und bei Kontakt damit erwärmt wird, dass die erwärmte Kühlluft sich in dem Schacht in Brennmodus mit dem die Rauchgase enthaltenden Gasstrom mischt, bevor er durch den Gasübertragungsweg geleitet wird, und dass der an CO₂-konzentrierte gasförmige Abfluss, der aus dem Ofen abgeleitet wird, die Rauchgase und die Kühlluft enthält.

4. Verfahren nach einem der Ansprüche 2 oder 3, **dadurch gekennzeichnet, dass** die Kühlluft dem Ofen in einem Gesamtvolumen zugeführt wird, das einem thermodynamischen Minimum entspricht oder kleiner ist als dieses, das erforderlich ist, um das kalzinierte Material auf eine Referenztemperatur von 100 °C abzukühlen.

5. Verfahren nach Anspruch 4, **dadurch gekennzeichnet, dass** das Gesamtvolumen der Kühlluft, die dem Ofen zugeführt wird, in der Größenordnung von 40 bis 60 % des thermodynamischen Minimums ist, vorzugsweise bei 50 % davon.

6. Verfahren nach Anspruch 1, **dadurch gekennzeichnet, dass** das Kühlen des kalizinierten Materials an dem Boden von jedem der Schächte oder an dem Boden des einzigen Schachts in Brennmodus eine Zufuhr von Kühlluft umfasst, die in Gegenstrom durch das absteigende kalzinierte Material strömt und in Kontakt damit erhitzt wird, dass das Verfahren ferner ein Abführen der erwärmten Kühlluft aus dem Ofen umfasst und dass das aus dem Ofen abgeleitete Abgas einen Gehalt an CO₂ von mindestens 90 Volumenprozent Trockengas enthält.

7. Verfahren nach Anspruch 6, **dadurch gekennzeichnet, dass** es ferner einen Wärmeaustausch zwischen der erwärmten Kühlluft, die aus dem Ofen abgeführt wird, und dem entnommenen Teil des aus dem Ofen abgeleiteten gasförmigen Abflusses vor oder nach dessen Vermischung mit konzentriertem Sauerstoff umfasst.

8. Verfahren nach einem der Ansprüche 6 und 7, **dadurch gekennzeichnet, dass** es ferner in dem Übertragungsweg für Gas eine Injektion einer Fraktion des entnommenen Teils des aus dem Ofen abgeführten gasförmigen Abflusses und, gegebenenfalls vor dieser Injektion, einen Wärmeaustausch zwischen der aus dem Ofen abgeführten erwärmten Kühlluft und der oben genannten zu injizierenden Fraktion umfasst.

9. Verfahren nach einem der Ansprüche 1 bis 8, **dadurch gekennzeichnet, dass** es in dem Übertragungsweg für Gas ferner eine Wassereinspritzung umfasst.

10. Verfahren nach einem der Ansprüche 1 bis 9, **dadurch gekennzeichnet, dass** die Brennstoffverbrennung eine Einführung eines gasförmigen, flüssigen oder festen Brennstoffs in den Schacht in Brennmodus umfasst, und dass im Fall eines festen Brennstoffs die Einführung mittels eines Teils des entnommenen Teils des aus dem Ofen abgeführten gasförmigen Abflusses oder einer anderen CO2-Quelle als Trägergas erfolgt.

## Claims

1. Method for calcining mineral rock in a regenerative parallel-flow vertical shaft furnace, wherein at least two shafts are interconnected via a gas transfer channel, this method comprising, in production mode,
- loading the carbonate mineral rock at the top of the furnace,
- preheating said rock,
- burning said rock with the decarbonation thereof into calcined material,
- cooling the calcined material via cooling air, and
- unloading the calcined material at the bottom of the shafts,
- each shaft operating alternately in burning mode and in preheating mode, one shaft being in burning mode for a predetermined time period while at least one other shaft is in preheating mode, and vice-versa,
- the burning mode comprising:
said loading of carbonate mineral rock at the top of the shaft in burning mode,
in the presence of said preheated carbonate mineral rock descending into this shaft, combusting fuel in the presence of oxygen so as to obtain said burning of this rock and the decarbonation thereof into calcined material with the release of combustion fumes in the form of a gaseous stream descending co-currently in the shaft in burning mode, and
said gaseous stream containing these combustion fumes moving from the shaft in burning mode to said at least one shaft in preheating mode using said gas transfer channel,
- the preheating mode comprising:
said preheating of the loaded carbonate mineral rock via heat exchange with the gaseous stream containing the combustion fumes from the gas transfer channel, which is ascending in said at least one shaft in preheating mode, counter-currently to said loaded carbonate mineral rock, and
discharging from the furnace a gaseous effluent based on the gaseous stream containing the combustion fumes, at the top of said at least one shaft in preheating mode,
**characterised in that** it that said combustion of fuel occurs in presence of oxygen in excess with respect to the stoichiometric requirements and **in that** it further comprises
- collecting a portion of the gaseous effluent discharged from the furnace,
- forming an oxidising mixture by mixing said collected portion of the gaseous effluent discharged from the furnace with concentrated dioxygen, and
- introducing this oxidising mixture at the top of the shaft in burning mode so as to ensure said fuel combustion in the presence of oxygen,
the gaseous effluent discharged from the furnace being concentrated in CO₂.

2. Method according to claim 1, **characterised in that** said cooling of the calcined material comprises, at the bottom of each of the shafts, supplying cooling air which flows counter-currently through the descending calcined material and is heated on contact with it, **in that** the heated cooling air mixes with the gaseous stream containing the combustion fumes in the shaft in burning mode before moving through the gas transfer channel and, after moving, with this gaseous stream in said at least one shaft in preheating mode, and **in that** the gaseous effluent concentrated in CO₂ discharged from the furnace contains the combustion fumes and the cooling air.

3. Method according to claim 1, **characterised in that** said cooling of the calcined material comprises, at the bottom of the only shaft in burning mode, supplying cooling air which flows counter-currently through the descending calcined material and is heated on contact with it, **in that** the heated cooling air mixes with the gaseous stream containing the combustion fumes before moving through the gas transfer channel, and **in that** the gaseous effluent concentrated in CO₂ discharged from the furnace contains the combustion fumes and the cooling air.

4. Method according to either of claims 2 and 3, **characterised in that** the cooling air is supplied to the furnace in a total volume equal to or less than a thermodynamic minimum necessary to cool the calcined material to a reference temperature of 100°C.

5. Method according to claim 4, **characterised in that** the total volume of cooling air supplied to the furnace is about 40 to 60% of said thermodynamic minimum, preferably equal to 50% thereof.

6. Method according to claim 1, **characterised in that** said cooling of the calcined material comprises, at the bottom of each of the shafts or at the bottom of the only shaft in burning mode, supplying cooling air which flows counter-currently through the descending calcined material and is heated on contact with it, **in that** the method further comprises removing the heated cooling air from the furnace and **in that** the gaseous effluent discharged from the furnace contains a CO₂ content of at least 90% by volume on dry gas.

7. Method according to claim 6, **characterised in that** it further comprises a heat exchange between the heated cooling air, removed from the furnace, and said collected portion of gaseous effluent discharged from the furnace, before or after it is mixed with concentrated dioxygen.

8. Method according to either of claims 6 and 7, **characterised in that** it further comprises, in the gas transfer channel, injecting a fraction of said collected portion of gaseous effluent discharged from the furnace and, optionally before this injection, a heat exchange between the heated cooling air, removed from the furnace, and the above-mentioned fraction to be injected.

9. Method according to any one of claims 1 to 8, **characterised in that** it further comprises, in the gas transfer channel, injecting water.

10. Method according to any one of claims 1 to 9, **characterised in that** said combustion of fuel comprises introducing a gaseous, liquid or solid fuel into the shaft in burning mode and **in that**, in the case of a solid fuel, said introduction is carried out using a portion of said collected portion of gaseous effluent discharged from the furnace, or using another source of CO₂ as a carrier gas.
